**Europäisches Patentamt**

**European Patent Office**

**Office européen des brevets**

(19)

(11) Veröffentlichungsnummer: **0 083 082**
**B1**

(12) **EUROPÄISCHE PATENTSCHRIFT**

(45) Veröffentlichungstag der Patentschrift: **23.03.88**

(51) Int. Cl.⁴: **G 01 D 5/36**

(21) Anmeldenummer: **82111940.1**

(22) Anmeldetag: **23.12.82**

(54) **Verfahren und Vorrichtung zur Messung der Länge einer Strecke oder eines Bogens.**

(30) Priorität: **29.12.81 DE 3151798**

(43) Veröffentlichungstag der Anmeldung:
**06.07.83 Patentblatt 83/27**

(45) Bekanntmachung des Hinweises auf die
Patenterteilung:
**23.03.88 Patentblatt 88/12**

(84) Benannte Vertragsstaaten:
**AT CH FR GB LI NL SE**

(56) Entgegenhaltungen:
**EP-A-0 039 900**
**EP-A-0 040 359**
**DE-A-3 018 527**

(73) Patentinhaber: **MTC Messtechnik und**
**Optoelektronik AG**
**Avenue Jean Jacques Rousseau 5**
**CH-2000 Neuchâtel (CH)**

(72) Erfinder: **Mehnert, Walter, Dr.**
**Grillparzerstrasse 6**
**D-8012 Ottobrunn (DE)**

(74) Vertreter: **Strasser, Wolfgang, Dipl.-Phys et al**
**Patentanwälte Strohschänk, Uri & Strasser**
**Innere Wiener Strasse 8**
**D-8000 München 80 (DE)**

Courier Press, Leamington Spa, England.

EP 0 083 082 B1

## Beschreibung

Die Erfindung betrifft ein Verfahren und eine Vorrichtung zur Messung einer Länge gemäß den Oberbegriffen der Ansprüche 1 bzw. 9.

Derartige Verfahren bzw. Vorrichtungen werden z.B. in der Industrie überall dort verwendet, wo ein Maschinenteil gegen den Rest der Maschine entweder auf einer linearen Bahn hin- und herbewegbar oder um eine Achse drehbar ist unt entweder kontinuierlich oder zu bestimmten vorgegebenen Zeitpunkten die momentane Position des beweglichen Maschinenteils dadurch gekennzeichnet werden soll, daß der lineare Abstand oder der Winkelabstand eines an dem beweglichen Maschinenteil willkürlich definierten Punktes von einem fest vorbestimmten Nullpunkt oder einem momentan willkürlich festgelegten Bezugspunkt aus gemessen wird.

In beiden Fällen ist mit dem einen der beiden relativ zueinander bewegbaren Körper ein Markierungsträger, d.h. z.B. entweder ein unter Umständen mehrere Meter langer Linearmaßstab oder eine im allgemeinen kreisförmige Skalenscheibe verbunden, wobei der Markierungsträger eine Vielzahl von in Richtung der Relativbewegung, d.h. linear oder winkelmäßig voneinander beabstandete Markierungen aufweist, die im allgemeinen die Form von sich senkrecht zur Richtung der Relativbewegung erstreckenden Schmalen Streifen bzw. Strichen besitzen. Der andere der beiden Körper trägt dann eine Abtastvorrichtung, deren Meßfühler in der Lage ist, die Markierungen zu erkennen und immer dann ein Signal zu erzeugen, wenn eine solche Markierung an ihm vorbeiläuft.

Mit hilfe dieser Abtastvorrichtung kann dan auch der oben erwähnte Punkt des die Abtastvorrichtung tragenden Körpers definiert werden, dessen linearer oder winkelmäßiger Abstand von einem am anderen Körper definierten Bezugs- oder Nullpunkt gemessen werden soll. Legt man durch diesen mit Hilfe der Abtasteinrichtung zu definierenden Punkt des einen Körpers eine zur Richtung der Relativbewegung senkrechte Gerade, die im Fall einer Drehbewegung radial durch den Drehmittelpunkt verläuft, so ist es genau genommen der Abstand dieser im folgenden kurz als Meßnormale bezeichneten Geraden vom Nullpunkt der Relativbewegung, der bei den in Rede stehenden Verfahren ausgemessen werden soll.

Um bei derartigen Meßverfahren zu einer möglichst hohen Genauigkeit und einem möglichst großen Auflösungsvermögen zu kommen, war es früher erforderlich, den Linearmaßstab bzw. die kreisförmige Skalenscheibe mit einer möglichst großen Anzahl von Skalenstrichen zu versehen, die sowohl hinsichtlich irher möglichst klein zu haltenden Breite als auch der Gleichförmigkeit ihrer gegenseitigen Abstände und ihres zur Richtung der Relativbewegung möglichst senkrechten Verlaufes sehr hohen Anforderungen genügen mußten. .

Zur Vermeidung der hierdurch bedingten hohen Herstellungskosten sind aus der DE—OS 30 18 496 bzw. der DE—OS 30 18 527 Verfahren der eingangs genannten Art zur Messung eines Winkels bzw. Bogenabstandes und zur Messung eines linearen Abstandes bekannt, bei denen zwischen dem abzutastenden Markierungsträger und dem Meßfühler der Abtasteinrichtung eine vor der Relativbewegung der beiden Körper unabhängige Rotationsbewegung stattfindet, deren Winkelgeschwindigkeit ständig gemessen wird. Trotz der Verwendung von einfachen und damit billigen Markierungsträgern, bei denen vergleichsweise wenig Markierungen mit relativ großer Breite ohne besondere Anforderungen an die Gleichförmigkeit der gegenseitigen Abstände und die Exaktheit ihrer Ausrichtung vorgesehen sind, wird eine hohen Meßgenauigkiet und eine große Auflösung dadurch erzielt, daß die Markierungsstreifen individuell erkannt und ihre Abstände in einem Eichlauf durch Messung der Zeitabstände der elektrischen Signale exakt vermessen werden, die der Meßfühler der Abtasteinrichtung erzeugt. Durch Vergleich der zo gewonnenen und gespeicherten Eichwerte mit den während des Betriebs neu gemessenen, entsprechenden Zeitabstandswerten und Berücksichtigung der momentanen Rotationsgeschwindigkeit ergibt sich der gesuchte Abstand mit der Genauigkeit der Zeitmessung.

Insbesondere das aus der DE—OS 30 18 527 bekannte, nach diesem Prinzip arbeitende Längenmeßverfahren weist jedoch trotz der Tatsache, daß es zu außerordentlich exakten Meßergebnissen führt, hinsichtlich der erforderlichen technischen Aufwandes einige Nachteile auf. Da hier der abzutastende Linearmaßstab notwendigerweise feststehen muß, wird die oben erwähnte relative Rotationsbewegung dadurch erzielt, daß der Meßfühler der Abtasteinrichtung sich permanent auf einer Kreisbahn so bewegt, daß er den interessierenden Teil des Linearmaßstabes periodisch überstreicht. Da die gewünschte hohe Meßgenauigkeit nur dann erzielt werden kann, wenn die Rotationsgeschwindigkeit des Meßfühlers während des Meßvorganges genau bekannt und sehr konstant ist, muß einerseits zum Antrieb der Rotationsbewegung ein kostspieliger Motor mit gutem Gleichlauf und andererseits eine mit dem Meßfühler mitrotierende Skalenscheibe verwendet werden, die eine Vielzahl von Markierungen aufweist, die durch einen mit dem die Abtasteinrichtung tragenden Körper fest verbundenen zweiten Meßfühler abgetastet werden, um nach einem aus der DE—OS 30 18 528 bekannten Verfahren die Winkelgeschwindigkeit ständig zu messen und auf Konstanz zu überwachen. Da zur Durchführung dieses Verfahrens die Markierungen der rotierenden Skalenscheibe ebenfalls einzeln identifiziert, ihre gegenseitigen Winkelabstände in ständig zu wiederholenden Eichläufen ausgemessen und die so erhaltenen Eichwerte für den späteren Vergleich mit den momentan gemessenen Zeitabstandswerten gespeichert werden müssen, ist hier ein vergleichsweise großer Datenverarbeitungsaufwand erforderlich. Darüber hinaus ist es zweckmäßig, den Radius der vom rotierenden Meßfühler durchlaufenen Kreisbahn möglichst groß zu wählen, um den durch das Ersetzen eines geraden Abstandes durch einen Bogenabstand entstehenden Meßfehler möglichst klein zu halten bzw. nicht durch zusätzliche Rechenoperationen korrigieren zu müssen. Hierdurch bekommt die Abtasteinrichtung eine relativ große Bauform, die es schwierig macht, die gesamte Anordnung, die auch noch den unter Umständen mehrere Meter langen Linearmaßstab umfaßt, so gegen Staub und Feuchtigkeit abzuschließen, daß ein Einsatz auch unter erschwerten Industriebedingungen möglich wird. Darüber hinaus ist es schwierig, die elektrischen Verbindungen eines rotierenden elektronischen Bauteils mit der übrigen, sich nicht mitbewegenden Schaltung so auszubilden, daß auch über lange Betriebszeiten hinweg eine hohe Zuverlässigkeit erzielt wird. Im vorliegenden Fall wird dieses allgemein vorhandene Problem noch dadurch verschärft, daß der Gleichlauf des rotierenden Meßfühlers möglichst wenig gestört werden darf.

Zwar tritt das zuletzt genannte Problem bei dem aus der DE—OS 30 18 496 bekannten Winkel-Meßverfahren nicht auf, weil dort die Skalenscheibe mit hoher Geschwindigkeit rotiert, doch muß auch hier für einen möglichst guten Gleichlauf der Rotationsbewegung gesorgt werden. Darüber hinaus ist es auch bei diesem Verfahren zweckmäßig, mit den beiden Abtasteinrichtungen zwei verschiedene Markierungsgruppen abzutasten, was ebenfalls zu einem hohen Datenverarbeitungsaufwand und einer großen Bauform führt, da jede der beiden Markierungsgruppen günstigerweise auf einer eigenen Skalenscheibe anzuordnen ist.

Demgegenüber liegt der Erfindung die Aufgabe zugrunde, ein Verfahren und eine Vorrichtung der eingangs genannten Art zu schaffen, die unter Beibehaltung der hohen Meßgenauigkeit und des hohen Auflösungsvermögens die Verwendung einer einfacheren, einen geringeren technischen und datenverarbeitungsmäßigen Aufwand erfordernden und damit kostengünstigeren Meßanordnung ermöglichen.

Zur Lösung dieser Aufgabe sieht die Erfindung die in den Ansprüchen 1 (Verfahren) bzw. 9 (Vorrichtung) niedergelegten Merkmale vor.

Bei dem erfindungsgemäßen Verfahren wird davon ausgegangen, daß zunächst der Abstand jeder der Markierungen des mit dem einen der beiden Körper fest verbundenen Markierungsträgers (Linearmaßstab oder Kreisscheibe) von einem vorbestimmten Nullpunkt genau bekannt ist. Dabei ist es nicht erforderlich, daß dieser Markierungsträger mit besonderer Präzision hergestellt worden ist. Vielmehr können die auf ihm angebrachten Markierungen vergleichsweise breite Linien sein, deren gegenseitige Abstände keineswegs identisch sein müssen. Vielmehr wird jede der Markierungen einzeln identifiziert und es wird ihr Abstand zur jeweiligen Nachbarmarkierung durch Eichmessungen, die mit der erfindungsgemäßen Vorrichtung selbst ausgeführt werden, mit einer der Genauigkeit des verwendeten Zeitmeßverfahrens entsprechenden Genauigkeit bestimmt, woraus sich dann auch der genaue Abstand jeder einzelnen Markierung vom Nullpunkt der Relativbewegung ermitteln läßt. Der Anschluß an absolute Größen ergibt sich bei der Messung von Winkeln bzw. Bogenlängen aus der Tatsache, daß jede Markierung des Markierungsträgers von sich selbst auch den Winkelabstand 360° besitzt, während bei geradlinigen Längenmessungen die Gesamtlänge des verwendeten Linearmaßstabes durch eine einmalige interferometrische Vermessung bestimmt werden kann.

Die Lösung der mit der Identifizierung der Markierungen, mit der Gewinnung der Eichwerte, mit der Erzeugung zeitlich "punktförmiger", idealer Marken aus den in Richtung der Relativbewegung eine endliche Breite und—angesichts der angestrebten Meßgenauigkeit—unregelmäßige Außenkonturen besitzenden realen Markierungen sowie mit der Durchführung einer äußerst genauen Messung der Zeitabstände zwischen dem Referenzsignal und den Markierungssignalen verbundenen Probleme ist in den obengenannten Offenlegungsschriften ausführlich beschrieben und kann beim ekfindungsgemäßen Verfahren in gleicher Weise erfolgen.

Ein wesentlicher Unterschied besteht darin, daß die Rotationsbewegung der bekannten Verfahren durch eine Oszillationsbewegung ersetzt wird, die der Meßfühler der Abtastvorrichtung parallel zur Richtung der Relativbewegung bezüglich des auch bei einer Winkelmessung mit dem anderen der beiden Körper starr verbundenen Markierungsträgers ausführt. Diese Oszillationsbewegung verläuft anders als die bekannte Rotationsbewegung von vornherein mit ungleichförmiger Geschwindigkeit zwischen zwei Umkehrpunkten, in denen das den Meßfühler tragende Schwingelement der Abtasteinrichtung jeweils zur Ruhe kommt, um in Richtung des anderen Umkehrpunktes zuerst beschleunigt und dann wieder so stark abgebremst zu werden, daß seine Geschwindigkeit im anderen Umkehrpunkt kurzzeitig gleich Null wird.

Um möglichst einfache Verhältnisse zu erhalten, ist es vorteilhaft, den oszillierenden Meßfühler zo anzuordnen, daß seine Meßschwerlinie in Richtung der Oszillationsbewegung gesehen durch die Mitte des Schwingsystems verläuft, und überdies die Meßnormale durch den Mittenpunkt der Oszillationsbewegung, d.h. also durch den Punkt zu legen, bezüglich dessen die Umkehrpunkte der Meßschwerlinie symmetrisch liegen.

Nimmt man nun an, daß der Meßfühler zum Zeitpunkt $t_1$ ein Signal abgibt, weil seine Meßschwerlinie eine Markierung überstreicht, von der die Meßnormale den auszumessenden Abstand d hat, und daß das Referenzsignal genau dann erzeugt wird, wenn die Meßschwerlinie des Meßfühlers mit der Meßnormalen zusammenfällt (d.h. bei Auslenkung Null des Schwingsystems zum Zeitpunkt $t_2$), so gilt für den gesuchten Abstand

$$d = (t_2 - t_1)\bar{v} =$$

$$= \Delta t \cdot \bar{v} \qquad (1)$$

wenn $\bar{v}$ die effektive mittlere Geschwindigkeit des Schwingsystems im Zeitraum $\Delta t$ ist. Bei entsprechend genauer Kenntnis von $\bar{v}$ ergibt sich also der gesuchte Abstand d mit der Genauigkeit der durchgeführten Zeitmessung.

Nun hat sich gezeigt, daß ein erfindungsgemäßes Schwingsystem insbesondere bei Ansteuerung mit einem sinusförmigen Erregungssignal bei jedem einzelnen Oszillationshub zwischen der Beschleunigungs- und der Abbremsphase einen Zeitraum durchläuft, in dem seine Geschwindigkeit mit sehr guter Näherung als konstant angesehen werden kann. Gibt man eine genügend große Maximalamplitude für die Oszillationsbewegung und einen hieran angepaßten Maximalabstand der auf dem Markierungsträger befindlichen Markierungen vor, so läßt sich immer erreichen, daß der in Gleichung (1) eingehende Zeitabstand $\Delta t$ in den Zeitraum fällt, in dem die Oszillationsgeschwindigkeit konstant ist. Damit kann dann der effektive Mittelwert $\bar{v}$ aus Gleichung (1) durch die konstante Geschwindigkeit $v_o$ ersetzt werden.

Dabei ist eine Langzeitkonstanz des Wertes von $v_o$ in keiner Weise erforderlich, da es erfindungsgemäß möglich ist, entweder die Geschwindigkeit $v_o$ direkt oder eine andere, diese Geschwindigkeit kennzeichnende Größe für jeden Oszillationshub gesondert zu messen und den entsprechenden Wert zur Berechnung von d nach Gleichung (1) mit dem bei eben diesem Oszillationshub gemessenen Zeitabstand $\Delta t$ zu kombinieren.

Zur Erzeugung des Referenzsignales ist es vorteilhaft, mit dem oszillierenden Meßfühler einen zweiten Markierungsträger mitoszillieren zu lassen, der durch einen zweiten Meßfühler abgetastet wird, der unbeweglich an dem die Abtastvorrichtung tragenden Körper befestigt ist. Dieser zweite Markierungsträger ist jedoch im Gegensatz zu den bekannten Verfahren keine große, eine Vielzahl von Markierungen tragende Skalenscheibe, sondern beispielsweise ein kleiner plättchenförmiger Glasmaßstab, der neben der wenigstens einen zur Erzeugung des Referenzsignals dienenden Markierung vorteilhafterweise auch noch zwei weitere Markierungen aufweist, die so angeordnet sind, daß der Zeitabstand der zwischen den ihnen zugeordneten, vom zweiten Meßfühler abgegebenen Signalen gemessen werden kann, ein exaktes Maß für die oben erwähnte, konstante Oszillationsgeschwindigkeit $v_o$ bildet.

Es ist vorteilhaft die zur Erzeugung des Referenzsignals dienende Markerung in der Mitte des mitschwingenden Markierungsträgers anzubringen und diesen am Schwingsystem so zu befestigen, daß die Meßschwerlinie des oszillierenden Meßfühlers mit dieser Markierung möglichst genau zusammenfällt. Der den mitschwingenden Markierungsträger abtastende Meßfühler wird günstigerweise so an dem die Abtastvorrichtung tragenden Körper befestigt, daß seine Meßschwerlinie mit der durch den Mittenpunkt der Oszillationsbewegung verlaufenden Meßnormalen zusammenfällt.

Durch die oben erwähnte Ausbildung des mitschwingenden Markierungsträgers als kleines, leichtes Plättchen ist es möglich, die Masse des gesamten Schwingsystems außerordentlich niedrig zu halten, so daß sich eine hohe Schwingfrequenz mit einer entsprechend großen Anzahl von pro Zeiteinheit gewinnbaren Meßwerten realisieren läßt, aus denen zur weiteren Steigerung der Meßgenauigkeit der Mittelwert gebildet werden kann.

Auch die zur Erzeugung der Schwingbewegung vorteilhafterweise verwendeten elektromagnetischen Spulen und die gesamte Lager- und Führungsvorrichtung für das Schwingsystem lassen sich sehr klein gestalten, so daß man insgesamt eine sehr kompakte, auf einfache Weise gegen Schmutz-, Staub- und Feuchtigkeitseinwirkung abzuschirmende Anordnung erhält. Darüber hinaus ergeben sich keinerlei Schwierigkeiten, den hin- und herschwingenden Meßfühler und die zugehörige Lichtquelle mit der ruhenden elektronischen Schaltung zu verbinden. Da der mitschwingende Markierungsträger nur eine sehr kleine Anzahl von Markierungen aufweist, deren Identifizierung auf sehr einfache Weise möglich ist und von denen im wesentlichen nur der Abstand der beiden Markierungen genau bekannt und gespeichert sein muß, die zur Ermittlung des die Geschwindigkeit $v_o$ kennzeichnenden Zeitabstandes dienen, ist auch der bei einer nach dem erfindungsgemäßen Verfahren arbeitenden Vorrichtung erforderliche Datenverarbeitungsaufwand wesentlich kleiner als beim Stand der Technik.

Wie bereits angedeutet, werden die beiden zur Gewinnung eines die Geschwindigkeit $v_o$ kennzeichnenden Wertes dienenden Markierungen auf dem mitschwingenden Markierungsträger vorteilhafterweise symmetrisch zur Mitte des Schwingungsträgers und von dieser so weit beabstandet angebracht, daß bei vorgegebener Maximalamplitude der Oszillationsbewegung die Geschwindigkeit des Schwingungssystems in dem Zeitraum als konstant betrachtet werden kann, der bei einem Oszillationshub zwischen dem Vorbeilaufen der in der betreffenden Bewegungsrichtung vorderen der beiden Markierungen und dem Vorbeilaufen der hinteren der beiden Markierungen am zweiten Meßfühler verstreicht. Wird dann für die beiden während dieses Oszillationshubs erzeugten Signale, die den in Rede stehenden Markierungen zugeordnet sind, ein Zeitabstand $t_o$ gemessen, so gilt für die interessierende Geschwindigkeit $v_o$

$$v_o = \frac{s_o}{t_o} \qquad (2)$$

wenn $s_o$ der bekannte, einmal sehr genau ausgemessene räumliche Abstand der beiden Markierungen auf dem mitschwingenden Markierungsträger ist. Setzt man Gleichung (2) in die obige Gleichung (1) ein, so erhält man

$$D = s_o \frac{\Delta t}{t_o} \qquad (3)$$

Daraus ergibt sich unmittelbar, daß der interessierende Abstand d mit der Genauigkeit gewonnen wird, mit der der Markierungsabstand $s_o$ und die Zeitabstände $\Delta t$ und $t_o$ gemessen worden sind.

Da, wie erwähnt, die Konstanz von $v_o$ zwischen den beiden zugehörigen Markierungen nur dann gewährleistet ist, wenn die maximale Amplitude der Oszillationsbewegung einen vorbestimmten Minimalwert nicht unterschreitet, ist es vorteilhaft, die Einhaltung dieser Bedingung ständig zu überwachen. Dies geschieht erfindungsgemäß mit Hilfe von zwei weiteren auf dem mitschwingenden Markierungsträger angebrachten Markierungen, die von der Mitte des Markierungsträgers so weit beabstandet sind, daß sie sich am zweiten Meßfühler nur dann kurz vor und kurz nach Durchlaufen des zugehörigen Umkehrpunktes vorbeibewegen, wenn die maximale Auslenkung des Schwingsystems aus seiner Mittellage die vorbestimmte Mindestgröße erreicht.

Vorteilhafterweise können diese beiden zuletzt genannten Markierungen unterschiedlich weit von der Mitte des Schwingsystems beabstandet angebracht werden, so daß die beiden Impulse, die die eine Markierung beim Durchlaufen des ihr zugeordneten Umkehrpunktes erzeugt, einen anderen zeitlichen Abstand besitzen, als die bei dem Doppelimpulse, die die andere Markierung beim Durchlaufen ihres Umkehrpunktes verursacht. Diese unterschiedlichen Zeitabstände dienen dann als Signal, das die Bewegungsrichtung des jeweils nachfolgenden Oszillationshubes kennzeichnet. Diese Bewegungsrichtung ist deswegen von Bedeutung, weil sie darüber entscheidet, ob der ausgemessene Abstand d zu dem bekannten Abstand der abgetasteten Markierung des ersten Markierungsträgers vom Nullpunkt der Relativbewegung addiert oder subtrahiert werden muß, um den Abstand der Meßnormalen vom Nullpunkt der Relativbewegung zu erhalten.

Besonders genaue Meßergebnisse erhält man dann, wenn die Markierungen auf dem ersten Markierungsträger so dicht nebeneinander angeordnet sind, daß der oszillierende Meßfühler in dem Zeitraum, in welchem die Geschwindigkeit $v_o$ des Schwingsystems konstant ist, immer zwei dieser Markierungen überstreicht, wobei dann die beiden entsprechenden Zeitabstände vom Referenzsignal gemessen werden. Für die Meßnormale ergeben sich dann zwei Abstände d1 und d2, deren Summe gleich dem Abstand der beiden überstrichenen Markierungen sein muß, wenn sich die beiden Körper während der Durchführung der Messung nicht gegeneinander bewegen. Dieses Kriterium kann entweder zur Überprüfung der gewonnenen Meßwerte oder zur Ermittlung der Geschwindigkeit einer gerade stattfindenen Relativbewegung zwischen den beiden Körpern verwendet werden.

Bei den obigen Überlegungen zur Erzeugung des Referenzsignals, zur Messung der momentanen Oszillationsgeschwindigkeit und zur Überwachung der Maximalamplitude der Oszillationsbewegung war immer davon die Rede, daß ein zweiter kleiner Markierungsträger mit dem ersten Meßfühler mitoszilliert und der diesen zweiten Markierungsträger abtastende zweite Meßfühler an dem die Abtasteinrichtung tragenden Körper fest angeordnet ist. Dies kann ohne Änderung des erfindungsgemäßen Prinzips auch in der Weise umgekehrt werden, daß am Schwingsystem zwei Meßfühler, vorteilhafterweise mit zusammenfallenden Meßschwerlinien befestigt sind, von denen der zweite einen am Körper befestigten zweiten Markierungsträger abtastet.

Für den Fall, daß der erste Markierungsträger ein Linearmaßstab ist, der, wie bereits erwähnt, unter Umständen eine erhebliche Länge besitzten kann, ist es zur Erzielung einer staub- und feuchtigkeitsdichten Anordnung vorteilhaft, den Linearmaßstab im Inneren eines im wesentlichen U-förmigen Hohlprofils anzuordnen, dan an seinen beiden Enden beispielsweise durch Stirnplatten dicht abgeschlossen ist, während seine offene Seite durch zwei mit einem unter Druck stehenden Medium füllbare Dichtkörper verschließbar ist, die im gefüllten Zustand mit einem solchen Druck aneinander anliegen, daß ein Eindringen von Staub oder Feuchtigkeit in das Innere des Hohlprofils ausgeschlossen ist. In diesem Fall ist der die Abtastvorrichtung tragende Körper mit einem Arm versehen, an dessen Spitze die erfindungsgemäße Abtastvorrichtung befestigt ist. Dieser Arm ragt zwischen den beiden Dichtkörpern hindurch in das Innere des Hohlprofils hinein, so daß der dort befindliche Linearmaßstab abgetastet werden kann. Versieht man den Arm mit entsprechenden Keilflächen, so liegen die beiden Dichtkörper auch an seinen Außenflächen völlig dicht an und er ist in Längsrichtung des Hohlprofils verschiebbar, ohne daß der dichte Abschluß des Innenraums des Hohlprofils unterbrochen wird.

Die Erfindung wird im folgenden anhand eines Ausführungsbeispiels unter Bezugnahme auf die Zeichnung beschrieben; in dieser zeigt:

Fig. 1 eine teilweise geschnittene Draufsicht auf eine erfindungsgemäße Vorrichtung zum Abtasten eines Linearmaßstabes,

Fig. 2 in vergrößertem Maßstab einen Schnitt durch die Vorrichtung aus Fig. 1 längs der Linie II—II,

Fig. 3 eine vergrößerte schematische Darstellung eines Teiles des Linearmaßstabes und der Abtastvorrichtung und

Fig. 4 ein über der Zeit aufgetragenes Impulsdiagramm zur Erläuterung der Vorrichtung gemäß Fig. 3.

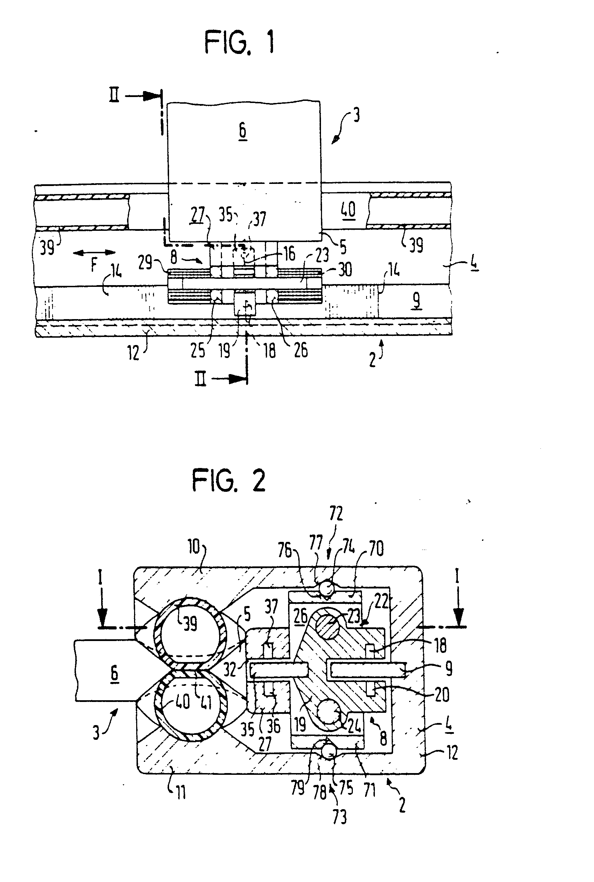

Die Fig. 1 und 2 zeigen zwei linear gegeneinander in Richtung des Doppelpfeils F verschiebbare Körper 2 und 3, von denen der erste von einem langen sich in Richtung des Doppelpfeils F erstreckenden, im wesentlichen U-förmigen Hohlprofil 4 und der andere von einem sich senkrecht zur Längsrichtung des Hohlprofils 4 erstreckenden und mit seinem freien Ende 5 in den Innenraums des Hohlprofils hineinragenden Arm 6 gebildet wird, der an diesem freien Ende 5 eine Abtastvorrichtung 8 trägt, die dazu dient, einen in Form eines Linearmaßstabes 9 ausgebildeten Markierungsträger abzutasten, der sich im wesentlichen über die gesamte Länge des Hohlprofils 4 erstreckt und so an der die beiden Profilschenkel 10, 11 miteinander verbindenden Profilrückwand 12 befestigt ist, daß er von ihr zu dem die Abtastvorrichtung 8 tragenden Arm 6 hin vorsteht. Auf dem Linearmaßstab 9 ist eine Vielzahl von in Richtung der Linearbewegung voneinander beabstandeten Markierungen 14 angebracht, mit deren Hilfe der Abstand einer mit dem Arm 6 sich mitbewegenden Meßnormalen 16 von einem in den Figuren nicht dargestellten Nullpunkt der Linearverschiebung bzw. die Länge der vom Körper 3 bei einer Linearbewegung zurückgelegten Strecke gemessen werden soll.

In einem konkreten Anwendungsfull kann beispielsweise das Hohlprofil 4 mit einem langgestreckten Maschinenrahmen verbinden sein, während der Arm 6 starr mit einem längs des Maschinenrahmens verschiebbaren Maschinenschlitten verbunden ist.

Die Markierungen 14 besitzten jeweils die Form eines schmalen, langgestreckten, im wesentlichen auf der Richtung der Linearbewegung senkrecht stehenden Streifens, der sich hinsichtlich der Lichtdurchlässigkeit von den ihn umgebenden Bereichen des linearen Markierungsträgers 9 unterscheidet.

Somit können diese Markierungen 14 mit Hilfe eines im vorliegenden Fall als Differential-Photodiode ausgebildeten Meßfühlers 18 der Abtastvorrichtung 8 abgetastet werden, der, wie man insbesondere der Fig. 2 entnimmt, in dem einen Schenkel eines den Linearmaßstab 9 gabelartig umgreifenden Meßfühlerträgers 19 montiert ist, während in dem gegenüberliegenden Schenkel des Meßfühlerträgers eine Lichtquelle 20 so angeordnet ist, daß die Verbindungslinie zwischen der Lichtquelle 20 und dem Meßfühler 18 in etwa senkrecht auf der die Markierungen 14 tragenden Oberfläche des linearen Markierungsträgers 9 steht.

Der Meßfühlerträger 19 ist fest mit dem Mittelteil von zwei in Fig. 2 übereinander angeordneten, geraden Stangen 23, 24 verbunden, deren freie Ende über Gleitlager von den beiden Schenkeln 25, 26 eines in der Draufsicht der Fig. 1 im wesentlichen U-förmigen Lagerbocks 27 so getragen sind, daß sich die beiden Stangen 23, 24 parallel zur richtung der Linearbewegung erstrecken. Dabei sind die beiden den Meßfühlerträger 10 gabelartig umgreifenden Schenkel 25, 26 am vorderen Ende 5 des Armes 6 starr montierten Lagerbocks 27 so weit voneinander beabstandet, daß der Meßfühlerträger 19 zwischen ihnen aufgrund der gleitenden Lagerung der ihn tragenden Stangen 23, 24 eine Oszillationsbewegung in Richtung der Linearverschiebung ausführen kann.

Diese Oszillationsbewegung wird dadurch erzeugt, daß auf den vom Meßfühlerträger 19 abgewandten Seiten der Schenkel 25, 26 des Lagerbocks 27 jeweils eine elektromagnetische Spule 29, 30 so angeordnet ist, daß die aus einem ferromagnetischen Material bestehende obere Stange 23 mit ihren freien Enden als Kern in diese beiden Spulen hineinragt und somit durch die Ansteuerung dieser beiden Spulen 29, 30 mit einem entsprechenden elektrischen Signal in Richtung des Pfeiles F hin- und herbewegt werden kann. Die zur Ansteuerung der Spulen 29, 30 dienenden elektrischen Anschlüsse sind in den Figuren der besseren Deutlichkeit halber ebensowenig dargestellt, wie die zur Lichtquelle 20 und zum Meßfühler 18 führenden Drähte.

Aufgrund der in Richtung des Pfeiles F erfolgenden ständigen Oszillationsbewegung des Meßfühlerträgers 19 überstreicht das von der Lichtquelle 20 zum Meßfühler 18 gehende Lichtbündel auch dann, wenn zwischen den beiden Körper 2, 3 keine Relativbewegung stattfindet, in ständigem Wechsel lichtundurchlässige Markierungen 14 und lichtdurchlässige Markierungszwischenräume, wodurch es moduliert wird.

Im vorliegenden Fall dient die untere Stange 24 lediglich zur Führung des aus dem Meßfühlerträger 19 und der oberen Stange 23 gebildeten Schwingelements 22. Sie könnte aber ebenfalls aus einem ferromagnetischen Material bestehen und zumindest mit einem ihrer freien Enden als Kern in eine weiter elektromagnetische Spule eintauchen, die dann ein die tatsächliche Oszillationsbewegung des Schwingelementes 22 widerspiegelndes elektrisches Signal abgeben würde, durch dessen Auswertung beispielsweise die effektive mittlere Oszillationsgeschwindigkeit $\bar{v}$ eines vorgegebenen Abschnittes eines jeden Oszillationshubs ermittelt werden könnte.

In seinem zwischen dem vorderen Ende 5 des Armes 6 und dem Meßfühlerträger 19 liegenden Bereich weist der Lagerbock 27 einen in Fig. 2 horizontalen, sich in Richtung der Linearbewegung erstreckenden Schlitz 32 auf, in dem ein sich parallel zum ersten Markierungsträger 9 erstreckender, fest am Meßfühlerträger 19 montierter und mit diesem mitschwingender zweiter Markierungsträger 35 angeordnet ist. Dieser als kleines Plättchen ausgebildete zweite Markierungsträger 35 weist, wie weiter unten ausführlich erläutert wird, einige sich hinsichtlich der Lichtdurchlässigkeit von den sie umgebenden Bereichen des zweiten Markierungsträgers 35 unterscheidende Markierungen 45 bis 49 auf, die als sich senkrecht zur Richtung der Oszillationsbewegung und damit zur Richtung der Linearverschiebung erstreckende schmale Striche ausgebildet sind.

Diese Markierungen 45 bis 49 werden von einem ebenfalls von einer Differential-Photodiode gebildeten zweiten Meßfühler 36 abgetastet, der im Lagerbock 27 unterhalb des Schlitzes 32 so montiert ist, daß die Verbindungslinie zwischen ihm und einer im Lagerbock 27 über dem Schlitz 32 angeordneten Lichtquelle 37 in etwa senkrecht auf der die Markierungen 45 bis 49 tragenden Oberfläche des zweiten Markierungsträgers 35 steht.

Durch die in Richtung des Pfeiles F erfolgende Oszillationsbewegung des zweiten Markierungsträgers 35 laufen in ständigem Wechsel lichtdurchlässige Markierungen 45 bis 49 und lichtundurchlässige Markierungszwischenräume durch das Meßlichtbündel der vom zweiten Meßfühler 36 und seiner Lichtquelle 37 gebildeten, fest mit dem Körper verbundenen zweiten Abtasteinrichtung hindurch, wodurch dieses Lichtbündel ebenfalls moduliert wird.

Als Lichtquellen 20 und 37 finden bevorzugt Licht emittierende Dioden Verwendung, bei denen es sich entweder um LED's oder um laser-Dioden handeln kann.

An den zum Arm 6 hingewandten Endbereichen der Schenkel 10, 11 des Hohlprofils 4 ist jeweils auf der zum gegenüberliegenden Schenkel weisenden Innenseite ein mit einem unter Druck stehenden Fluid füllbarer Schlauch 39 bzw. 40 befestigt, der sich über die gesamte Länge des Hohlprofils 4 erstreckt und an dessen in Fig. 1 nicht wiedergegebenen, in der dortigen Draufsicht aberlinks bzw. rechts befindlichen Enden an dort angeordneten, den Querschnitt des Hohlprofils überdeckenden Stirnflächen dichtend anliegt. Die Querschnittsabmessungen der Schläuche 39, 40 sind so bemessen, daß sie sich im gefüllten Zustand in den neben dem Arm 6 liegenden Bereichen längs einer Fläche 41 berühren und somit den Innenraum des Hohlprofils 4 luft- und staubdicht abschließen. In dem Bereich, in dem er zwischen den beiden Schläuchen 39, 40 hindurchtreten muß, ist der Arm 6 mit in Fig. 1 durch punktierte Linien wiedergegebenen keilförmigen Flächen versehen, die ohne scharfe Kanten zu bilden in die in Fig. 2 obere bzw. untere Fläche des Armes 6 übergehen, an der in Fig. 1 linken bzw. rechten Seitenkante des Armes 3 ihre geringste Dicke besitzen und zur Mitte des Armes 3 hin bis auf dessen Maximalstärke ansteigen.

Durch diese Keilflächen werden die Schläuche 39, 40 in dem Bereich, in denen der Arm 6 zwischen ihnen hindurchtritt, zwar auseinandergedrückt und in der in Fig. 2 dargestellten Weise verformt. Dabei liegen die Schläuche 39, 40 aber so an den Keilflächen des Armes 6 an, daß der Innenraum des Hohlprofils 4 völlig abgedichtet bleibt, obwohl der Arm 6 in Richtung des Pfeiles F über die gesamte Länge des Hohlprofils 4 frei verschieblich ist. Diese Anordnung bietet den großen Vorteil, daß eine nach dem erfindungsgemäßen Verfahren arbeitende Vorrichtung zum Abtasten eines langgestreckten Linearmaßstabes auch in einer Umgebung mit starker Staubeinwirkung eingesetzt werden kann, ohne daß es zu einem Verschmutzen der Markierungsträger bzw. der Abtasteinheiten kommt.

In Fig. 1 ist der besseren Deutlichkeit halber der obere, geschnitten dargestellte Schlauch 39 im Bereich des Armes 6 unterbrochen, so daß hier nur der untere, nicht geschnittene Schlauch 40 sichtbar ist.

Die beiden Schenkel 25, 26 des Lagerbocks 27 sind an ihrem oberen bzw. unteren Ende jeweils durch einen sich in Richtung der Linearbewegung erstreckenden Verbindungssteg 70 bzw. 71 (siehe insbesondere Fig. 2) miteinander verbunden. In jedem dieser Stege ist eine sich in Richtung der Linearbewegung erstreckende V-förmige Nut 76, 79 ausgebildet und so angeordnet, daß in Fig. 2 die Verbindungslinie der beiden Nuten mit der Verbindungslinie der Mitten der beiden Stangen 23, 24 zusammenfällt. Die beiden Nuten 76, 79 dienen dazu, jeweils eine Vielzahl von Kugeln, von denen in Fig. 2 jeweils nur eine, nämlich die obere Kugel 74 und die untere kugel 75 dargestellt sind, aufzunehmen und so haltern, daß diese Kugeln bei der Linearbewegung des Armes 6 in Richtung des Pfeils F vom Lagerbock 27 mitgenommen werden.

In den den Außenflächen der Verbindungsstege 70, 71 unmittelbar und mit einem sehr geringen Abstand gegenüberliegenden Innenflächen der Schenkel 10, 11 des U-förmigen Hohlprofils 4 sind zwei weitere V-förmige Nuten 77, 78 ausgebildet, in denen die Kugeln der zo erzeugten linearen Kugellager 72, 73 geführt werden.

Die Scheitelwinkel der Nuten 77, 78 im Hohlprofil 4 sind wesentlich stumpfer als die Scheitelwinkel der Nuten 76, 79 im Lagerbock 27 ausgebildet. Dadurch wird erreicht, daß der bei dieser Anordnung notwendigerweise auftretende Schlupf der Kugeln 74, 75 in den Nuten 75, 79 des Lagerbocks 27 auftritt, während in den Nuten 77, 78 des Hohlprofils 4 ein einwandfreies Abrollen der Kugeln 74, 75 gewährleistet ist. Hierdurch wird in vorteilhafter Weise eine außerordentlich exakte und leichtgängige Führung des frei vom Körper 2 vorkragenden Lagerbocks bezüglich des am anderen Körper 3 befestigten Hohlprofils 4 erreicht.

Gegenüber dem eben beschrieben, eine Vorrichtung zum Ausmessen geradliniger Relativbewegungen zwischen zwei Körpern 2 und 3 dienenden Ausführungsbeispiel weist eine erfindungsgemäße Vorrichtung zum Ausmessen von Winkelverschiebungen den Hauptunterschied auf, daß anstelle des Linearmaßstabes 9 eine kreisförmige Skalenscheibe abgetastet wird, die an dem einen der beiden Körper konzentrisch zur Drehachse der Relativbewegung montiert ist. Der andere der beiden Körper trägt dann die Abtastvorrichtung, die ebenso aufgebaut sein kann, wie die oben beschriebene Abtasteinrichtung 8, und die so angeordnet wird, daß die durch die Meßschwerlinie des zweiten Meßfühlers definierte Meßnormale 16 als Radialstrahl die Drehachse der Relativbewegung schneidet. Um zu vermeidem, daß bei einem kleinen Radius der Skalenscheibe, wie er für die Erzielung einer kleinen Bauform günstig ist, die bei einer geradlinigen Oszillationsbewegung des Schwingsystems gemessenen geradlinigen Abstände zwischen Markierungen der Skalenscheibe und der Meßnormalen auf Bogenabstände umgerechnet werden müssen, kann vorteilhafterweise die oben beschrieben Abtastvorrichtung so modifiziert werden, daß sich der erste Meßfühler auf einer Teilkreisbahn hin- und herbewegt, deren Mittelpunkt in der Drehachse der Relativbewegung liegt. Da hier zwischen dem feststehenden Markierungsträger und seiner Abtastvorrichtung keine geradlinigen Verschiebungen auftreten, kann die gesamte Anordnung ohne weiteres in einem geschlossenen Gehäuse untergebracht und gegen Umwelteinflüsse abgeschirmt werden, wobei das Gehäuse wegen der Verwendung nur einer Skalenscheibe und der geringen Größe der oszillierenden Abtastvorrichtung sehr kleine Abmessungen aufweisen kann.

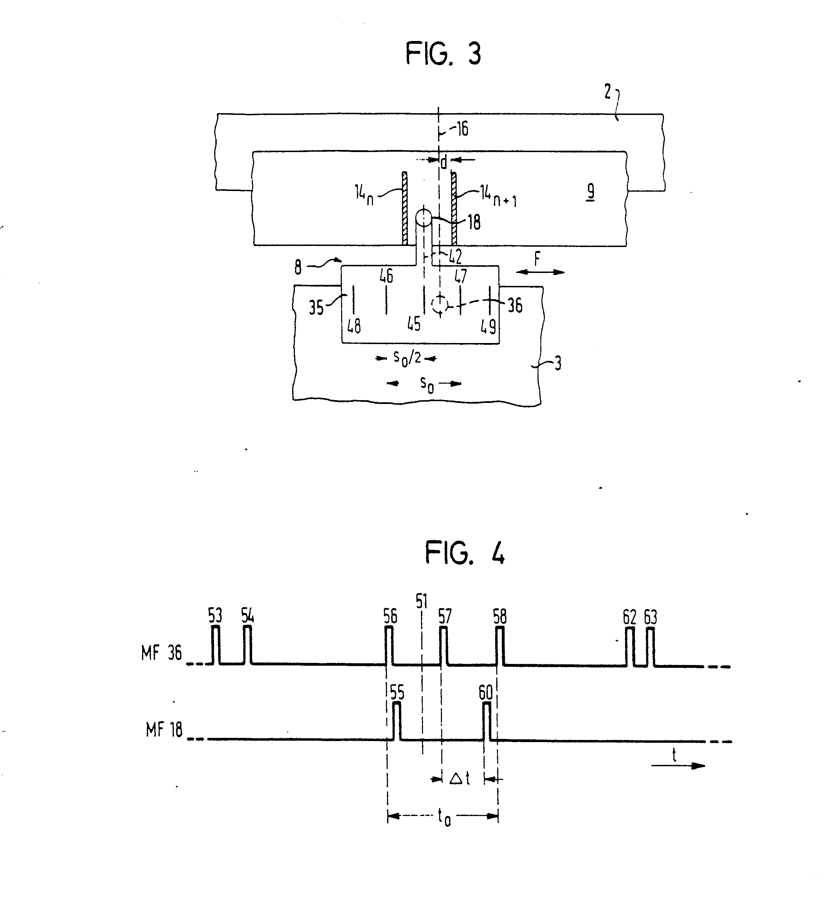

Fig. 3 zeigt nochmals in schematisierter Form und mit größerem Maßstab die beiden gegeneinander bewegbaren Körper 2 und 3 sowie den am einen Körper befestigten Markierungsträger 9 und die am anderen Körper angebrachte Abtastvorrichtung 8. Von den Markierungen 14 des Markierungsträgers 9 sind nur zwei, nämlich die Markierung $14_n$ und $14_{n+1}$ weidergegeben.

Der Körper 3 ist bezüglich des Körpers 2 so positioniert, daß die Meßnormale 16, die durch den Trennsteg der am Körper 3 als zweite Meßfühler 36 befestigten Differential-Photodiode definiert ist, von der Markierung $14_{n+1}$ den Abstand d besitzt.

Über dem Meßfühler 36 befindet sich das Schwingsystem, von dem in Fig. 3 in stark schematisierter Weise nur der oszillierende Meßfühler 18 und der mit ihm verbundene zweite Markierungsträger 35 wiedergegeben sind. Der besseren Deutlichkeit halger sind hier die Lager- und Antriebsvorrichtungen für das Schwingsystem weggelassen.

Die Meßschwerlinie 42 des oszillierenden Meßfühlers 18 definiert die Mitte des aus diesem Meßfühler 18 und dem zweiten Markierungsträger 35 bestehenden Schwingsystems. Das Schwingsystem ist hinsichtlich seiner geometrischen Ausdehnung zu dieser Mitte symmetrisch ausgebildet.

Auf dem zweiten Markierungsträger 35 befindet sich im vorliegenden Fall eine auf der Meßschwerlinie des oszillierenden Meßfühlers 18 liegende erste Markierung 45, die dazu dient, immer dann, wenn ihre optische Mitte die Meßschwerlinie des feststehenden Meßfühlers 36 aufgrund der Oszillationsbewegung des Schwingsystems überstreicht, das im vorliegenden Fall die Nullauslenkung des Schwingsystems kennzeichnende Referenzsignal zu erzeugen.

In Richtung des die Oszillationsrichtung angebenden Doppelpfeils F gesehen sind links und rechts von der ersten, zur Erzeugung des Referenzsignals dienenden Markierung 45 zwei weitere Markierungen 46 und 47 angeordnet, von denen jede von der ersten Markierung 45 den Abstand $s_0/2$ besitzt, so daß der Gesamtabstand der beiden Markierungen 46, 47 gleich $s_0$ ist. Dieser Abstand wird wenigstens einmal nach irgendeinem bekannten Verfahren, beispielsweise interferometrisch, mit Hilfe eines Meßmikroskops oder vorteilhafterweise unter Verwendung der in der DE—OS 30 18 528 beschriebenen Vorrichtung sehr genau ausgemessen. Im letzteren Fall wird zunächst eine ganze kreisförmige Skalenscheibe, die eine Vielzahl von Markierungen aufweist, genau vermessen und dann in einzelne Stücke geteilt, von denen jedes die für die Durchführung des erfindungsgemäßen Verfahrens erforderlichen Markierungen trägt, deren Abstand damit sehr genau bekannt ist. Dieser Abstand ist so gewählt, daß bei vorgegebener Maximalamplitude der sinusförmigen Oszillationsschwingung die Oszillationsgeschwindigkeit in dem Zeitraum mit sehr guter Näherung als konstant betrachtet werden kann, der bei jedem Oszillationshub zwischen dem Überstreichen der Meßschwerlinie des feststehenden Meßfühlers 36 durch die bei dieser Hubbewegung vordere der beiden Markierungen 46, 47 und dem Überstreichen dieser Meßschwerlinie durch die hintere der beiden Markierungen 46, 47 vergeht.

Schließlich weist der Markierungsträger 35 zwei in der Nähe des linken bzw. rechten Randes angeordnete Markierungen 48, 49 auf, die so angeordnet sind, daß sie kurz vor und nach dem Durchgang des Schwingsystems durch seinen Umkehrpunkt die Meßschwerlinie des feststehenden Meßfühlers 36 nur dann überstreichen, wenn das Schwingsystem die Mindest-Maximalauslenkung erfahren hat, die die Konstanz der Oszillationsgeschwindigkeit während des oben definierten Zeitraumes gewährleistet.

Darüber hinaus können die beiden Markierungen 48, 49 etwas asymmetrisch zur Mitte des Markierungsträgers 35 angeordnet sein, so daß das Doppelsignal, das von der einen Markierung 48 beim Durchlaufen des ihr zugeordneten Umkehrpunktes erzeugt wird, einen anderen Abstand aufweist, als das von der anderen Markierung 49 beim Durchlaufen des anderen Umkehrpunktes erzeugte Doppelsignal. Aus diesen Zeitunterschieden kann dann auf die Richtung der nachfolgenden Oszillationsbewegung geschlossen werden.

In Fig. 4 sind in einem Zeitdiagramm in der ersten Zeile die Signale des feststehenden Meßfühlers 36 und in der zweiten Zeile die Signale des oszillierenden Meßfühlers 18 aufgetragen, die sich bei die in Fig. 3 dargestellten Situation ergeben, wenn das Schwingsystem aus der in der Fig. 3 gezeigten Position weiter nach rechts zum dort liegenden Umkehrpunkt hin schwingt. Dabei entspricht die gestrichelte Linie 51 in Fig. 4 ungefähr dem in Fig. 3 quasi durch eine Momentaufnahme festgehaltenen Zeitpunkt.

In der ersten Zeile der Fig. 4 sind links von der gestrichelten Linie 51 die beiden Signale 53, 54 dargestellt, die vom feststehenden Meßfühler 36 bzw. seinem nachgeschalteten Geber beim Durchlaufen des vorausgehenden Umkehrpunktes des Schwingsystems aufgrund des Vorbeilaufens der Markierung 49 erzeugt wurden.

Bei der aus der Stellung der Fig. 3 heraus nach rechts erfolgenden Bewegung des Schwingsystems überstreicht zunächst die bei diesem Oszillationshub vordere der beiden Markierungen 46, 47, d.h. die Markierung 47 die Meßschwerlinie des feststehenden Meßfühlers 36. Dies ist in der oberen Zeile der Fig. 4 durch das links von der Linie 51 wiedergegebene impulsförmige Signal 56 dargestellt. Das nächste Signal 57 wird erzeugt, wenn die Mittelmarkierung 45 den Meßfühler 36 überstreicht. Somit ist dieses Signal 57 das oben ausführlich erläuterte Referenzsignal. Auf das Referenzsignal 57 folgt ein weiteres impulsförmiges Signal 58, das von der bei diesem Oszillationshub hinteren der beidem Markierungen 46, 47, d.h. von der Markierung 46 erzeugt worden ist. Zwischen den Signalen 56 und 57 überstreicht der oszillierende Meßfühler 18 die Markierung 14n, was in der zweiten Zeile durch den entsprechenden Impuls 55 wiedergegeben ist. Nach dem Signal 57 überstreicht der oszillierende Meßfühler 18 die Markierung $14_{n+1}$ des feststehenden Markierungsträgers 9, wodurch das in der zweiten Zeile der Fig. 4 wiedergegebene Meßfühlersignal 60 erzeugt wird.

Wie oben ausführlich erläutert und in Fig. 4 nochmals angedeutet, werden einerseits der Zeitabstand Δt zwischen dem Referenzsignal 57 und dem Meßfühlersignal 60 und andererseits der Zeitabstand $t_o$ zwischen den beiden impulsförmigen Signalen 56 und 58 ausgemessen. Aus diesen Meßwerten und dem bekannten geometrischen Abstand $s_o$ der den Signalen 56, 58 zugeordneten Markierungen 46, 47 ergibt sich dann der gesuchte Abstand d gemäß der oben erläuterten Gleichung (3).

Durch Subtraktion des Wertes d von dem als bekannt vorausgesetzten Abstand der Markierung $14_{n+1}$ vom Nullpunkt der Relativbewegung zwischen den beiden körpern 2 und 3 ergibt sich der Abstand der Meßnormalen 16 von diesem Nullpunkt, wenn man annimmt, daß dieser (nicht dargestellte) Nullpunkt in Fig. 3 auf der linken Seite liegt.

In der oberen Zeile der Fig. 4 sind ganz rechts zweit weitere impulsförmige Signale 62, 63 dargestellt, die vom Meßfühler 36 beim Vorbeilaufen der Markierung 48 kurz vor und kurz nach dem Durchgang des Schwingsystems durch den zweiten Umkehrpunkt abgegeben werden. Wie man der Fig. 4 deutlich entnimmt, ist der Zeitabstand zwischen den beiden impulsförmigen Signalen 62, 63 kleiner als der entsprechende Zeitabstand zwischen den beidem impulsförmigen Signalen 53 und 54, was darauf beruht, daß die zugehörigen Markierungen 49 und 48 unterschiedliche Abstände von der in der Mitte des Schwingsystems befindlichen Markierung 45 besitzen. Durch Auswertung dieser verschiedenen Zeitabstände läßt sich ein Signal gewinnen, das die Richtung des jeweils nachfolgenden Oszillationshubes anzeigt.

Außerdem dürfen die Zeitabstände zwischen den Signalen 53, 54 einerseits und den Signalen 62, 63 andererseits einen bestimmten Mindestwert nicht unterschreiten, damit sichergestellt ist, daß das Schwingsystem wirklich mit einer Maximalamplitude schwingt, die die Konstanz von $v_o$ im Zeitraum $t_o$ gewährleistet.

Gemäß einer nicht dargestellten Ausführungsform kann vorgesehen sein, daß am Meßfühlerträger 19 nicht ein zweiter Markierungsträger sondern ein zweiter Meßfühler so montiert ist, daß seine Meßschwerlinie mit der des ersten Meßfühlers 18 zusammenfällt. In diesem Fall ist dann der zweite Markierungsträger fest mit dem Lagerbock 27 oder einem anderen Teil des Arms 6 so verbunden, daß er bei der Oszillationsbewegung des Schwingsystems 22 vom zweiten Meßfühler abgetastet wird. Vorzugsweise wird die auf diesem zweiten Markierungsträger befindliche Markierung zur Erzeugung des Referenzsignals wieder so angeordnet, daß das Referenzsignal genau dann erzeugt wird, wenn das Schwingsystem seine Null- bzw. Mittellage durchläuft. In diesem Fall definiert dann diese Markierung gleichzeitig auch die Meßnormale. Im übrigen entspricht diese weitere Ausführungsform in Funktion und Aufbau vollständig der unter Bezugnahme auf die Figuren geschilderten Ausführungsform.

Insbesondere der schematischen Darstellung der Fig. 3 läßt sich deutlich entnehmen, daß die erfindungsgemäße Vorrichtung ohne weiteres auch zur Messung von Bogenlängen bzw. Winkeln verwendet werden kann. Dabei könnte in der Fig. 3 der Punkt, in dem die auf der Zeichnungsebene senkrecht stehende Drehachse, um die sich die beiden Körper 2 und 3 relativ zueinander bewegen, entweder oben oder unten liegen. Im ersten Fall könnte dann z.B. der erste Markierungsträger 9 als volle Kreisscheibe ausgebildet werden, um die die Abtastvorrichtung 8 außen umläuft. Im anderen Fall wäre der erste Markierungsträger 9 ein scheibenförmiger Kreisring, dessen Innenkante vom Meßfühlerträger umgriffen ist.

## Patentansprüche

1. Verfahren zur Messung der Länge einer Strecke oder eines Bogens, die bzw. der bei der Relativbewegung zweier Körper durchlaufen wird, von denen der eine mit einem Markierungsträger fest verbunden ist, der eine Vielzahl von in Richtung der Relativbewegung voneinander beabstandeten Markierungen aufweist, während am anderen Körper eine Abtasteinrichtung mit einem Meßfühler vorgesehen ist, der zum Abtasten der Markierungen eine von der Relativbewegung der beiden Körper unabhängige Bewegung ausführt und dessen nachgeschalteter Geber jedesmal dann ein Signal abgibt, wenn die Meßschwerlinie des Meßfühlers die optische Mitte einer Markierung überquert, bei dem in wenigstens einem der Endpunkte der auszumessenden Strecke oder des auszumessenden Bogens der Zeitabstand zwischen wenigstens einem Referenzsignal, das eine vorbestimmte Lage des sich bewegenden Meßfühlers bezüglich einer an dem ihn tragenden Körper festgelegten, auf der Richtung der Relativbewegung senkrecht stehenden Meßnormalen kennzeichnet, und wenigstens einem Meßfühlersignal gemessen wird, das einer identifizierten Markierung des Markierungsträgers zugeordnet ist, deren optische Mitte einen bekannten Abstand vom anderen Endpunkt der Strecke oder des Bogens besitzt, und bei dem aus der vorbestimmten Lage, aus dem gemessenen Zeitabstand und aus einer die momentane Geschwindigkeit des Meßfühlers bezüglich des ihn tragenden Körpers kennzeichnenden Größe der momentane Abstand der Meßnormalen von der optischen Mitte der identifizierten Markierung berechnet wird, dadurch gekennzeichnet, daß die Bewegung des Meßfühlers eine zur Richtung der Relativbewegung der beiden Körper in etwa parallel bzw. tangential gerichtete Oszillationsbewegung ist und daß die vorbestimmte Lage des Meßfühlers, in der das Referenzsignal erzeugt wird, ein parallel zur Bahn der Oszillationsbewegung gemessener Abstand der Meßschwerlinie des Meßfühlers von der Meßnormalen ist.

2. Verfahren nach Anspruch 1, dadurch gekennzeichnet, daß die Oszillationsbewegung eine Sinusschwingung ist.

3. Verfahren nach Anspruch 1 oder 2, dadurch gekennzeichnet, daß die Meßnormale durch den Mittenpunkt der Oszillationsbewegung gelegt ist und daß das Referenzsignal dann erzeugt wird, wenn der vorbestimmte Abstand der Meßschwerlinie des oszillierenden Meßfühlers von der Meßnormalen gleich Null ist.

4. Verfahren nach einem der vorhergehenden Ansprüche, dadurch gekennzeichnet, daß das Referenzsignal durch einen einem zweiten Meßfühler nachgeschalteten Geber immer dann erzeugt wird, wenn der zweite Meßfühler eine sich aufgrund der Oszillationsbewegung an ihm vorbeibewegende, auf einem zweiten Markierungsträger angebrachte Markierung abtastet, wobei entweder der zweite Meßfühler oder der zweite Markierungsträger mit dem die Abtastvorrichtung tragenden Körper verbunden ist und das jeweils andere Element mit dem ersten Meßfühler mitschwingt.

5. Verfahren nach Anspruch 4, dadurch gekennzeichnet, daß zur Gewinnung einer die momentane Oszillationsgeschwindigkeit des Meßfühlers kennzeichnenden Größe der Zeitabstand von zwei vom zweiten Meßfühler abgegebenen Signalen gemessen wird, die zwei Markierungen zugeordnet sind, die auf dem zweiten Markierungsträger in Richtung der Oszillationsbewegung voneinander beabstandet und symmetrisch zu der zur Erzeugung des Referenzsignals dienenden Markierung angeordnet sind.

6. Verfahren nach Anspruch 5, dadurch gekennzeichnet, daß der Abstand der beiden Markierungen, die zur Gewinnung der die momentane Oszillationsgeschwindigkeit kennzeichnenden Größe dienen, in Abhängigkeit von der Maximalamplitude der Oszillationsbewegung so gewählt wird, daß die Oszillationsgeschwindigkeit mit ausreichender Näherung in dem ausgemessenen Zeitraum konstant ist, der zwischen jeweils zwei zusammengehörigen, diesen Markierungen zugeordneten Signalen des zweiten Meßfühlers liegt und daß ständig überwacht wird, ob die maximale Amplitude der Oszillationsbewegung einen vorbestimmten Wert nicht unterschreitet.

7. Verfahren nach einem der vorhergehenden Ansprüche, dadurch gekennzeichnet, daß ein die momentane Richtung der Oszillationsbewegung kennzeichnendes Signal erzeugt wird.

8. Verfahren nach einem der vorhergehenden Ansprüche, dadurch gekennzeichnet, daß auf dem ersten Markierungsträger die Markierungen so dicht nebeneinander angeordnet sind, daß der oszillierende Meßfühler in jeder beliebigen Position der beiden gegeneinander bewegbaren Körper wenigstens zwei Markierungen innerhalb des Zeitraumes überstreicht, in dem die Oszillationsgeschwindigkeit in ausreichender Näherung konstant ist, und daß die Zeitabstände zwischen dem wenigstens einen Referenzsignal und dem ihm unmittelbar vorausgehenden, einer Markierung des ersten Markierungsträgers zugeordneten Signal des oszillierenden Meßfühlers sowie zwischen dem Referenzsignal und dem ihm unmittelbar nachfolgenden, einer anderen Markierung des ersten Markierungsträgers zugeordneten Signal des oszillierenden Meßfühlers gemessen werden.

9. Vorrichtung zur Durchführung des Verfahrens nach einem oder mehreren der vorhergehenden Ansprüche, mit einem an dem einen Körper (2) starr befestigten Markierungsträger (9), mit einer am anderen Körper (3) angeordneten Abtastvorrichtung (8), die einen sich unabhängig von der Relativbewegung der beiden Körper bewegenden Meßfühler (18) mit einem nachgeschalteten, beim Abtasten einer Markierung jeweils ein zeitsignifikantes Signal erzeugenden Geber umfaßt, mit einer Vorrichtung zur Erzeugung eines eine vorbestimmte Lage des Meßfühlers bezüglich einer an dem ihm tragenden Körper festgelegten Meßnormalen kennzeichnenden Referenzsignals, mit einer Identifizierungsvorrichtung zum Erkennen der jeweils vom Meßfühler abgetasteten Markierung des Markierungsträgers, mit einer die Zeitabstände zwischen den identifizierten Markierungen zugeordneten Signalen und dem Referenzsignal ausmessenden Zeitmeßvorrichtung, mit einer die Längen- bzw. Winkelabstände der einzelnen Markierungen von einem vorbestimmten Nullpunkt sowie einen die Lage des Meßfühlers bezüglich der Meßnormalen zum Zeitpunkt der Erzeugung des Referenzsignals enthaltenden Speicher, mit einer Vorrichtung zur Erzeugung einer die momentane Geschwindigkeit des Meßfühlers bezüglich des ihn tragenden Körpers kennzeichnenden Größe und mit einer zum Berechnen des momentanen Abstandes der Meßnormalen von wenigstens einer der identifizierten, abgetasteten Markierungen und vom Nullpunkt der Relativbewegung aus diesen Größen dienenden Vorrichtung, dadurch gekennzeichnet, daß der Meßfühler (18) an dem ihn tragenden Körper (3) über ein eine zur Richtung der Relativbewegung der beiden Körper (2, 3) in etwa parallele Oszillationsbewegung ausführendes Schwingelement (22) gelagert ist.

10. Vorrichtung nach Anspruch 9, dadurch gekennzeichnet, daß das Schwingelement (22) wenigstens eine sich in Richtung der Oszillationsbewegung erstreckende Stange (23) und einen am Mittelbereich der Stange (23) befestigten Meßfühlerträger (19) umfaßt, daß die freien Enden der Stange (23) jeweils über ein Gleitlager in einem an dem die Abtastvorrichtung (8) tragenden Körper (3) befestigten Lagerbock (27) gelagert und für die Oszillationsbewegung geführt sind, und daß die Stange (23) aus ferromagnetischem Material besteht und als Anker wenigstens eines zur Erzeugung der Oszillationsbewegung ansteuerbaren Elektromagneten ausgebildet ist.

11. Vorrichtung nach Anspruch 10, dadurch gekennzeichnet, daß wenigstens eines der Enden der Stange (23) als Kern in eine elektromagnetische Spule (29 oder 30) hineinragt, und daß das Schwingelement (22) eine zweite, mit dem Meßfühlerträger (19) verbundene, zur Führung dienende Stange (24) umfaßt, die parallel zur ersten Stange (23) angeordnet ist und deren beide Enden ebenfalls im Lagerbock (27) gleitend gelagert und geführt sind.

12. Vorrichtung nach einem der Ansprüche 9 bis 11, dadurch gekennzeichnet, daß der oszillierende Meßfühler (18) an dem Schwingelement (22) so befestigt ist, daß seine Meßschwerlinie durch den Mittenpunkt der Oszillationsbewegung verläuft, wenn das Schwingelement (22) seine unausgelenkte Mittellage durchläuft.

13. Vorrichtung nach einem der Ansprüche 10 bis 12, dadurch gekennzeichnet, daß an dem Meßfühlerträger (19) ein zweiter, mitoszillierender Markierungsträger (35) befestigt ist, auf dem die zur Erzeugung des Referenzsignals dienende Markierung (45) so angeordnet ist, daß ihre optische Mitte die Meßschwerlinie eines zweiten Meßfühlers (36), der an dem die Abtasteinrichtung (8) tragenden Körper (3) starr befestigt ist, immer gerade dann überstreicht, wenn die Meßschwerlinie des oszillierenden Meßfühlers (18) den Mittenpunkt seiner Bewegungsbahn durchläuft.

14. Vorrichtung nach Anspruch 13, dadurch gekennzeichnet, daß der zweite Markierungsträger (35) zwei weitere, zur Ermittelung der die momentane Oszillationsgeschwindigkeit kennzeichnenden Größe dienende Markierungen (46, 47) aufweist, die symmetrisch zu der zur Erzeugung des Referenzsignals dienenden Markierung (45) und von dieser in Richtung der Oszillationsbewegung beabstandet angeordnet sind.

15. Vorrichtung nach Anspruch 14, dadurch gekennzeichnet, daß der zweite Markierungsträger (35) zwei weitere, zur Überwachung des Erreichens des erforderlichen Mindestwertes für die Maximalamplitude dienende Markierungen (48, 49) aufweist, die so angeordnet sind, daß jeweils eine von ihnen kurz vor und kurz nach Durchlaufen eines der Umkehrpunkte der Oszillationsbewegung von der Meßschwerlinie des zweiten Meßfühlers überstrichen wird, und daß zur Erzeugung eines die Richtung der Oszillationsbewegung kennzeichnenden Signals die beiden jeweils kurz vor und nach dem Durchlaufen eines Umkehrpunktes abgetasteten Markierungen (48, 49) so angeordnet sind, daß die ihnen jeweils zugeordneten Doppelsignale unterschiedliche Zeitabstände aufweisen.

16. Vorrichtung nach einem der Ansprüche 9 bis 15, bei der der erste Markierungsträger ein Linearmaßstab ist, dadurch gekennzeichnet, daß der Linearmaßstab (9) im Inneren eines im wesentlichen U-förmigen, an seinen Enden abgeschlossenen Hohlprofils (4) angeordnet ist, daß am freien Ende eines jeden der beiden Schenkel (10, 11) des Hohlprofils (4) ein sich über die ganze Länge des Hohlprofils (4) erstreckender, an den dichten Endabschlüssen des Hohlprofils dicht anliegender, schlauchförmiger, mit einem unter Druck stehenden Medium füllbarer Dichtkörper (39, 40) befestigt ist, daß die Querschnittsabmessungen der beiden Dichtkörper (39, 40) so bemessen sind, daß sie im gefüllten Zustand aneinander anliegen und somit den Innenraum des Hohlprofils (4) dicht abschließen, und daß die Abtasteinrichtung (8) an einem sich zwischen den beiden Dichtkörpern (39, 40) hindurcherstreckenden Arm (6) des die Abtasteinrichtung (8) tragenden Körpers (3) befestigt und im Inneren des Hohlprofils (4) angeordnet ist.

17. Vorrichtung nach Anspruch 16, dadurch gekennzeichnet, daß der Lagerbock (27) vermittels wenigstens eines linearen Kugellagers (72, 73) am Hohlprofil (4) geführt ist, daß das lineare Kugellager (72, 73) eine die Kugeln (74, 75) halternde und mitnehmende, sich in Richtung der Linearbewegung erstreckende, in etwa V-förmige Nut (76, 79) in einer Fläche des Lagerbocks (27) und eine die Kugeln (74, 75) führende, sich in Richtung der Linearbewegung und über deren gesamte Länge erstreckende, in etwa V-förmige Nut (77, 78) in einer der Fläche des Lagerbocks (27) unmittelbar gegenüberliegenden Innenfläche des Hohlprofils (4) umfaßt.

18. Vorrichtung nach Anspruch 17, dadurch gekennzeichnet, daß der Scheitelwinkel der Nut (76, 79) im Lagerbock (27) spitzer als der Scheitelwinkel der Nut (77, 78) im Hohlprofil (4) ist.

19. Vorrichtung nach einem der Ansprüche 17 oder 18, dadurch gekennzeichnet, daß zwei lineare Kugellager (72, 73) in einer zur Richtung der Linearbewegung und zur Längsrichtung des Armes (6) senkrechten Richtung voneinander beabstandet und beiderseits der Ebene, in der die Oszillationsbewegung des ersten Meßfühlers (18) und des zweiten Markierungsträgers (35) verläuft, angeordnet sind.

**Revendications**

1. Procédé pour mesurer la longueur d'une droite ou d'une courbe parcourue lors du mouvement relatif de deux corps, dont l'un est relié rigidement à un porte-repères qui présente un grand nombre de repères distants les uns des autres dans la direction ou mouvement relatif, tandis qu'il est prévu, sur l'autre corps, un dispositif de balayage muni d'une sonde mesureuse qui accomplit, pour balayer les repères, un mouvement indépendant du mouvement relatif des deux corps, et dont l'émetteur branché en aval délivre un signal toutes les fois que la ligne principale de mesurage de la sonde mesureuse coupe le centre optique d'un repère; dans lequel, à au moins l'un des points extrêmes de la droite ou de la courbe devant être mesurée, l'on mesure l'intervalle de temps entre au moins un signal de référence caractérisant une position predéterminée de la sonde mesureuse en mouvement, par rapport à une normale de mesurage qui est fermement assigné au corps portant cette sonde et est perpendiculaire à la direction du mouvement relatif, et au moins un signal de la sonde mesureuse qui est affecté à un repère identifié du porte-repères, dont le centre optique se trouve à une distance connue de l'autre point extrême de la droite ou de la courbe; et dans lequel la distance séparant, à un instant considéré, la normale de mesurage et le centre optique du repère identifié est calculée à partir de la position prédéterminée, à partir de l'intervalle de temps mesuré et à partir d'une grandeur caractérisant la vitesse, à l'instant considéré, de la sonde mesureuse par rapport au corps qui la porte, caractérisé par le fait que le mouvement de la sonde mesureuse est un mouvement oscillatoire orienté sensiblement parallèlement ou, respectivement, tangentiellement à la direction du mouvement relatif des deux corps; et par le fait que la position prédéterminée de la sonde mesureuse, dans laquelle le signal de référence est engendré, est une distance, mesurée parallèlement à la trajectoire du mouvement oscillatoire, comprise entre la ligne principale de mesurage de la sonde mesureuse et la normale de mesurage.

2. Procédé selon la revendication 1, caractérisé par le fait que le mouvement oscillatoire est une oscillation sinusoïdale.

3. Procédé selon la revendication 1 ou 2, caractérisé par le fait que la normale de mesurage passe par le centre du mouvement oscillatoire; et par le fait que le signal de référence est engendré lorsque la distance prédéterminée, entre la ligne principale de mesurage de la sonde mesureuse oscillante et la normale de mesurage, est égale à zéro.

4. Procédé selon l'une des revendications précédentes, caractérisé par le fait que le signal de référence est engendré, par un émetteur branché en aval d'une seconde sonde mesureuse, toutes les fois que cette seconde sonde mesureuse balaie un repère qui est implanté sur un second porte-repères et qui se déplace en regard de ladite sonde par suite du mouvement oscillatoire, soit la seconde sonde mesureuse, soit le second porte-repères étant alors relié au corps portant le dispositif de balayage, et l'autre élément considéré oscillant conjointement avec la première sonde mesureuse.

5. Procédé selon la revendication 4, caractérisé par le fait que, pour obtenir une grandeur caractérisant la vitesse d'oscillation de la sonde mesureuse à l'instant considéré, l'on mesure l'intervalle de temps entre deux signaux délivrés par la seconde sonde mesureuse et affectés à deux repères qui sont distants l'un de l'autre, sur le second porte-repères, en direction du mouvement oscillatoire, et sont disposés symétriquement au repère servant à engendrer le signal de référence.

6. Procédé selon la revendication 5, caractérisé par le fait que la distance entre les deux repères servant à obtenir la grandeur caractérisant la vitesse d'oscillation à l'instant considéré est choisie, en fonction de l'amplitude maximale du mouvement oscillatoire, de telle sorte que la vitesse d'oscillation soit constante, avec une approximation suffisante, dans l'intervalle de temps mesuré séparant respectivement deux signaux associés de la seconde sonde mesureuse, qui sont affectés auxdits repères; et par le fait qu'on surveille en permanence si l'amplitude maximale du mouvement oscillatoire ne dépasse pas négativement une valeur préétablie.

7. Procédé selon l'une des revendications précédentes, caractérisé par le fait qu'il est engendré un signal caractérisant la direction du mouvement oscillatoire à l'instant considéré.

8. Procédé selon l'une des revendications précédentes, caractérisé par le fait que, sur le premier porte-repères, les repères sont implantés en une juxtaposition rapprochée telle que, dans n'importe quelle position des deux corps mobiles l'un par rapport à l'autre, la sonde mesureuse oscillante balaie au moins deux repères dans les limites de l'intervalle de temps dans lequel la vitesse d'oscillation est constante avec une approximation suffisante; et par le fait qu'on mesure les intervalles de temps entre le signal de référence prévu au minimum et le signal de la sonde mesureuse oscillante qui le précède directement et est affecté à un repère du premier porte-repères, ainsi qu'entre le signal de référence et le signal de la sonde mesureuse oscillante qui lui succède directement et est affecté à un autre repère du premier porte-repères.

9. Dispositif pour la mise en oeuvre du procédé selon l'une ou plusieurs des revendications précédentes, comprenant un porte-repères (9) fixé rigidement à l'un (2) des corps; un dispositif de balayage (8), installé sur l'autre corps (3) et présentant une sonde mesureuse (18) qui se déplace indépendamment du mouvement relatif des deux corps, avec un émetteur qui est branché en aval et délivre, lors du balayage d'un repère, un signal respectif représentatif du temps; un dispositif pour engendrer un signal de référence caractérisant une position prédéterminée de la sonde mesureuse, par rapport à une normale de mesurage fermement assignée au corps portant cette sonde; un dispositif d'identification, pour identifier le repère du porte-repères respectivement balayé par la sonde mesureuse; un dispositif de mesurage temporel, mesurant les intervalles de temps entre les signaux affectés à des repères identifiés, et le signal de référence;

une mémoire renfermant les distances respectivement linéaires ou angulaires comprises entre les repères individuels et un point zéro prédéterminé, ainsi que la position de la sonde mesureuse par rapport à la normale de mesurage à l'instant de la délivrance du signal de référence; un dispositif pour engendrer une grandeur caractérisant la vitesse de la sonde mesureuse, à l'instant considéré, par rapport au corps qui la porte; et un dispositif destiné à calculer, sur la base de ces grandeurs, la distance séparant, à l'instant considéré, la normale de mesurage d'au moins l'un des repères balayés identifiés, et du pont zéro du mouvement relatif, caractérisé par le fait que la sonde mesureuse (18) est montée, sur le corps (3) qui la porte, par l'intermédiaire d'un élément oscillant (22) accomplissant un mouvement oscillatoire sensiblement parallèle à la direction du mouvement relatif des deux corps (2, 3).

10. Dispositif selon la revendication 9, caractérisé par le fait que l'élément oscillant (22) comprend au moins une tige (23) s'étendant dans la direction du mouvement oscillatoire, et un support (19) de sonde mesureuse fixé dans la région médiane de la tige (23); par le fait que les extrémités libres de la tige (23) sont montées et guidées en vue du mouvement oscillatoire, par l'intermédiaire d'un coussinet respectif de glissement, dans un sabot de portée (27) fixé au corps (3) portant le dispositif de balayage (8); et par le fait que la tige (23) consiste en un matériau ferromagnétique et est réalisée en tant qu'induit d'au moins un électro-aimant activable pour provoquer le mouvement oscillatoire.

11. Dispositif selon la revendication 10, caractérisé par le fait qu'au moins l'une des extrémités de la tige (23) pénètre, en tant que noyau, dans un enroulement électromagnétique (29 ou 30); et par le fait que l'élément oscillant (22) renferme une seconde tige (24) qui est reliée au support (19) de la sonde mesureuse, sert au guidage, est disposée parallèlement à la première tige (23), et dont les deux extrémités sont également montées et guidées à coulissement dans le sabot de portée (27).

12. Dispositif selon l'une des revendications 9 à 11, caractérisé par le fait que la sonde mesureuse oscillante (18) est fixée, à l'élément oscillant (22), de manière telle que sa ligne principale de mesurage passe par le centre du mouvement oscillatoire lorsque l'élément oscillant (22) franchit se position centrale non déviée.

13. Dispositif selon l'une des revendications 10 à 12, caractérisé par le fait qu'un second porte-repères (35) oscillant conjointement est fixé au support (19) de la sonde mesureuse, porte-repères sur lequel le repère (45), servant à engendrer le signal de référence, occupe une position telle que sont centre optique balaie toujours exactement la ligne principale de mesurage d'une seconde sonde mesureuse (36), fixée rigidement au corps (3) portant le dispositif de balayage (8), lorsque la ligne principale de mesurage de la sonde mesureuse oscillante (18) franchit le centre de sa trajectoire de mouvement.

14. Dispositif selon la revendication 13, caractérisé par le fait que le second porte-repère (35) présente deux autres repères (46, 47) qui servent à déterminer la grandeur caractérisant la vitesse d'oscillation à l'instant considéré, sont disposés symétriquement par rapport au repère (45) servant à engendrer le signal de référence, et sont disposés à distance de ce repère dans la direction du mouvement oscillatoire.

15. Dispositif selon la revendication 14, caractérisé par le fait que le second porte-repère (35) présente deux autres repères (48, 49) qui servent à surveiller le fait que la valeur minimale nécessaire de l'amplitude maximale est atteinte, et qui occupent des positions telles que l'un d'entre eux soit balayé, par la ligne principale de mesurage de la seconde sonde mesureuse, respectivement peu avant et peu après le franchissement de l'un des points d'inversion du mouvement oscillatoire; et par le fait que, pour engendrer un signal caractérisant la direction du mouvement oscillatoire, les deux repères (48, 49), balayés respectivement peu avant et après le franchissement d'un point d'inversion, sont disposés de manière que les signaux doubles qui leur sont respectivement affectés présentent des intervalles de temps différents.

16. Dispositif selon l'une des revendications 9 à 15, dans lequel le premier porte-repères est une échelle graduée linéaire, caractérisé par le fait que l'échelle graduée linéaire (9) se trouve à l'intérieur d'un profilé creux (4) ayant sensiblement la forme d'un U obturé à ses extrémités; par le fait qu'un corps d'étanchement (39, 40) en forme de flexible, pouvant être empli d'un fluide sous pression, appliqué de manière étanche sur les obturations extrémes étanches du profilé creux, et s'étendant sur toute la longueur de ce profilé creux (4), est fixé à l'extrémité libre de chacune des deux branches (10, 11) du profilé creux (4); par le fait que les sections des deux corps d'étanchement (39, 40) sont dimensionnées de telle sorte qu'ils portent l'un contre l'autre en condition emplie, et obturent ainsi de manière étanche l'espace interne du profilé creux (4); et par le fait que le dispositif de balayage (8) est fixé à un bras (6), s'étendant entre les deux corps d'étanchement (39, 40), du corps (3) portant le dispositif de balayage (8), et est logé à l'intérieur du profilé creux (4).

17. Dispositif selon la revendication 16, caractérisé par le fait que le sabot de portée (27) est guidé sur le profilé creux (4) au moyen d'au moins un roulement à billes linéaire (72, 73); et par le fait que le roulement à billes linéaire (72, 73) comprend une gorge (76, 79) sensiblement en V qui retient en entraîne les billes (74, 75), s'étend dans la direction du mouvement linéaire et est ménagée dans une surface du sabot de portée (27), et une gorge (77, 78) sensiblement en V qui guide les billes (74, 75), s'étend dans la direction du mouvement linéaire sur toute la longueur de ce dernier, et est pratiquée dans une face interne du profilé creux (4) située directement en vis-à-vis de la surface du sabot de portée (27).

18. Dispositif selon la revendication 17, caractérisé par le fait que l'angle au sommet de la gorge (76, 79) ménagée dans le sabot de portée (27) est plus aigu que l'angle au sommet de la gorge (77, 78) pratiquée dans le profilé creux (4).

19. Dispositif selon l'une des revendications 17 ou 18, caractérisé par le fait que deux roulements à billes linéaires (72, 73) se trouvent à distance l'un de l'autre dans une direction perpendiculaire à la direction du mouvement linéaire et au sens longitudinal du bras (6), et sont disposés de part et d'autre du plan dans lequel s'opère le mouvement oscillatoire de la première sonde mesureuse (18) et du second porte-repères (35).

**Claims**

1. Method for the measurement of the length of a straight line or an arc, which is traversed during the relative movement of two bodies, of which one is firmly connected with a marking carrier which is provided with a plurality of markings spaced one from the other in the direction of the relative movement, whilst provided on the other body is a scanning equipment with a measuring sensor, which for the scanning of the markings executes a movement independent of the relative movement of both the bodies and the transmitter of which connected therebehind delivers a signal each time the measuring centroidal axis of the measuring sensor crosses over the optical centre of a marking, in which in at least one of the end points of the straight line or the arc to be measured, the time spacing is measured between at least one reference signal, which characterise a predetermined position of the moving measuring sensor with respect to a measuring normal fixed on the body carrying it and being perpendicuar to the direction of the relative movement, and at least one measuring sensor signal which is associated with an identified marking of the marking carrier, the optical centre of which marking has a known spacing from the other end point of the straight line or the arc, and in which the instantaneous spacing of the measuring normal from the optical centre of the identified marking is calculated from the predetermined position, from the measured time spacing and from a magnitude characterising the instantaneous speed of the measuring sensor with respect to the body carrying it, characterised thereby, that the movement of the measuring sensor is an oscillatory movement directed about parallelly or tangentially to the direction of the relative movement of both the bodies and that the predetermined position of the measuring sensor, in which the reference signal is generated, is a spacing, measured parallelly to the path of the oscillatory movement, of the measuring centroidal line of the measuring sensor from the measuring normal.

2. Method according to claim 1, characterised thereby, that the oscillatory movement is a sinusoidal oscillation.

3. Method according to claim 1 or 2, characterised thereby, that the measuring normal passes through the centre of the oscillatory movement and that the reference signal is generated when the predetermined spacing of the measuring centroidal line of the oscillating measuring sensor from the measuring normal is equal to zero.

4. Method according to one of the preceding claims, characterised thereby, that the reference signal is generated by a transmitter connected behind a second measuring sensor always when the second measuring sensor scans a marking, which is moving past if by reason of the oscillatory movement and situated on a second marking carrier, wherein either the second measuring sensor or the second marking carrier is connected with the body carrying the scanning device and the respective other element oscillates together with the first measuring sensor.

5. Method according to claim 4, characterised thereby, that for obtaining a magnitude characterising the instantaneous speed of oscillation of the measuring sensor, the time spacing of two signals is measured, which are delivered by the second measuring sensor and associated with two markings which are spaced each from the other on the second marking carrier in direction of the oscillatory movement and arranged symmetrically to the marking which serve for the generation of the reference signal.

6. Method according to claim 5, characterised thereby, that the spacing of both the markings, which serve for the obtaining of the magnitude characterising the instantaneous speed of oscillation, is so chosen in dependence on the maximum amplitude of the oscillatory movement that the speed of oscillation is constant to sufficient approximation in the measured time span which lies between two signals, respectively belonging together and associated with these markings, of the second measuring sensor and that it is constantly monitored whether the maximum amplitude of the oscillatory movement does not fall below a predetermined value.

7. Method according to one of the preceding claims, characterised thereby, that a signal characterising the instantaneous direction of the oscillatory movement is generated.

8. Method according to one of the preceding claims, characterised thereby, that the markings on the first marking carrier are arranged so closely one beside the other that the oscillating measuring sensor in any desired position of both the relatively movable bodies passes over at least two markings within the time span, in which the speed of oscillation is constant to sufficient approximation and that the time spacings are measured between the at least one reference signal and the signal, immediately preceding it and associated with a marking of the first marking carrier, of the oscillating measuring sensor as well as between the reference signal and the signal, immediately following it and associated with another marking of the first marking carrier, of the oscillating measuring sensor.

9. Apparatus for the performance of the method according to one or more of the preceding claims, with a marking carrier (9) rigidly fastened to the one body (2), with a scanning device (8) which is arranged at the other body (3) and comprises a measuring sensor (18) moving independently of the relative movement of both the bodies, with a transmitter connected behind said measuring sensor and generating a time-significant signal on each scanning of a marking, with a device for the generation of a reference signal characterising a predetermined position of the measuring sensor with respect to a measuring normal fixed on the body carrying it, with an identifying device for the recognition of the marking, respectively scanned by the measuring sensor, of the marking carrier, with a time-measuring device measuring the time spacings between the reference signal and the signals associated with identified markings, with a memory containing the length or angle spacings of the individual markings from a predetermined zero point as well as the position which is attained by the measuring sensor with respect to the measuring normal at the instant of the generation of the reference signal, with a device for the generation of a magnitude characterising the instantaneous speed of the measuring sensor with respect to the body carrying it and with a device serving for the calculation from these magnitudes of the instantaneous spacing of the measuring normal from at least one of the identified scanned markings and from the zero point of the relative movement, characterised thereby, that the measuring sensor (18) is borne at the body (3) carrying it by means of an oscillatory element (22) executing an oscillatory movement about parallel to the direction of the relative movement of both the bodies (2, 3).

10. Apparatus according to claim 9, characterised thereby, that the oscillatory element (22) comprises at least one rod (23) extending in direction of the oscillatory movement and a measuring sensor carrier (19) fastened at the central region of the rod (23) and that the free ends of the rod (23) are each borne and guided for the oscillatory movement by means of a slide bearing in a bearing block (27) fastened to the body (3) carrying the scanning device (8) and that the rod (23) consists of ferromagnetic material and is constructed as armature of at least one electromagnet drivable for the generation of the oscillatory movement.

11. Apparatus according to claim 10, characterised thereby, that at least one of the ends of the rod (23) projects as core into an electromagnetic coil (29 or 30) and that the oscillatory element (22) comprises a second rod (24), which serves for guidance, is connected with the measuring sensor carrier (19), is arranged parallel to the first rod (23) and both ends of which are likewise slidingly borne and guided in the bearing block (27).

12. Apparatus according to one of the claims 9 to 11, characterised thereby, that the oscillating measuring sensor (18) is so fastened at the oscillatory element (22) that its measuring centroidal line extends through the centre of the oscillatory movement when the oscillatory element (22) traverses its undeflected centre position.

13. Apparatus according to one of the claims 10 to 12, characterised thereby, that fastened to the measuring sensor carrier (19) is a second, co-oscillating marking carrier (35), on which the marking (45) serving for the generation of the reference signal is so arranged that its optical centre always passes over the measuring centroidal line of a second measuring sensor (36), which is rigidly fastened to the body (3) carrying the scanning equipment (8), just when the measuring centroidal line of the oscillating measuring sensor (18) traverses the centre of its path of movement.

14. Apparatus according to claim 13, characterised thereby, that the second marking carrier (35) is provided with two further markings (46, 47), which serve for the determination of the magnitude characterising the instantaneous speed of oscillation and which are arranged symmetrically to the marking (45), which serves for the generation of the reference signal, and spaced from this in direction of the oscillatory movement.

15. Apparatus according to claim 14, characterised thereby, that the second marking carrier (35) is provided with two further markings (48, 49), which serve for the monitoring of the attainment of the required minimum value for the maximum amplitude and which are so arranged that a respective one of them is passed over shortly before and shortly after the traversal of one of the reversal points of the oscillatory movement by the measuring centroidal line of the second measuring sensor and that both the markings (48, 49) respectively scanned shortly before and after the traversal of a reversal point are so arranged for the generation of a signal characterising the direction of the oscillatory movement that the double signals respectively associated with them have different time spacings.

16. Apparatus according to one of the claims 9 to 15, in which the first marking carrier is a linear scale, characterised thereby, that the linear scale (9) is arranged in the interior of a substantially U-shaped hollow profile (4) closed off at its ends, that a hose-shaped sealing body (39, 40), which is fillable with a medium standing under pressure, resting closely against the tight end terminations of the hollow profile and extending over the entire length of the hollow profile (4), is fastened at the free end of each of both the limbs (10, 11) of the hollow profile (4), that the cross-sectional dimensions of both the sealing bodies (39, 40) are so dimensioned that they rest each against the other in the filled state and thereby tightly close off the interior space of the hollow profile (4), and that the scanning equipment (8) is fastened at an arm (6) of the body (3) carrying the scanning equipment (8) and is arranged in the interior of the hollow profile (4), said arm extending through between both the sealing bodies (39, 40).

17. Apparatus according to claim 16, characterised thereby, that the bearing block (27) is guided at the hollow profile (4) by means of at least one linear ball bearing (72, 73) and that the linear ball bearing (72, 73) comprises an approximately V-shaped groove (76, 79) retaining and entraining the balls (74, 75) and extending in direction of the linear movement, in a surface of the bearing block (27) and an approximately V-shaped groove (77, 78), guiding the balls (74, 75) and extending in direction of the linear movement and over its entire length, in an internal surface of the hollow profile (4) lying directly opposite the surface of the bearing block (27).

18. Apparatus according to claim 17, characterised thereby, that the vertex angle of the groove (76, 79) in the bearing block (27) is more acute than the vertex angle of the groove (77, 78) in the hollow profile (4).

19. Apparatus according to one of the claims 17 or 18, characterised thereby, that two linear ball bearings (72, 73) are arranged spaced each from the other in a direction perpendicular to the direction of the linear movement and to the longitudinal direction of the arm (6) and to both sides of the plane, in which the oscillatory movement of the first measuring sensor (18) and of the second marking carrier (35) takes place.

# FIG. 1

# FIG. 2

# FIG. 3

# FIG. 4